# FASCICULE DE BREVET EUROPEEN

(11) **EP 0 659 607 B1**
(45) Date de publication et mention de la délivrance du brevet: **15.07.1998**
(21) Numéro de dépôt: 94402886.9
(22) Date de dépôt: 14.12.1994
(51) Int. Cl.: B60N 2/20, B60N 2/22

(54) **Articulation sans jeu pour siège à dossier basculable**
Gelenk mit Spielausgleich für Sitze mit schwenkbarer Rückenlehne
Articulation with backlash elimination for seat with tilting backrest

(30) Priorité: 23.12.1993 FR 9315598
(43) Date de publication de la demande: 28.06.1995
(73) Titulaire: CESA COMPAGNIE EUROPEENNE DE SIEGES POUR AUTOMOBILES, 92307 Levallois-Perret Cédex (FR)
(72) Inventeur: Fourrey, François, F-45200 Montargis (FR); Large, Nathalie, F-45230 Chatillon Coligny (FR)
(74) Mandataire: Polus, Camille

(56) Documents cités:
- DE-A- 3 234 305
- DE-A- 4 012 860
- FR-A- 2 649 942
- GB-A- 2 156 901
- US-A- 5 150 632
- US-A- 5 156 439
- US-A- 5 205 609

## Description

La présente invention concerne une articulation pour siège à dossier basculable relativement à l'assise et, plus particulièrement, une articulation sans jeu pour un tel siège notamment de véhicules par exemple automobiles terrestres.

Les mécanismes qui équipent les sièges pour véhicules automobiles notamment terrestres, sont sources de jeu et d'usure dont il résulte des bruits désagréables. Des tentatives ont été faites pour mettre au point des articulations de dossier qui pallient certains de ces inconvénients.

Une solution de mécanisme est, par exemple, décrite dans le document EP-A-0 121 452 pour un siège dont le dossier est régulièrement inclinable relativement à l'assise. La solution proposée élimine le jeu de l'articulation lorsque le dossier est dans la position où il a l'inclinaison choisie et qu'il est verrouillé, et cela quel que soit le jeu initial dû aux tolérances de fabrication ou ultérieur dû à l'usure de l'articulation.

Les véhicules automobiles terrestres du genre à deux portes latérales par exemple du type "coupé" ou "cabriolet", outre le mécanisme de réglage de l'inclinaison du dossier relativement à l'assise d'un siège, sont équipés d'un mécanisme spécifique qui permet le basculement notamment du dossier vers l'avant du véhicule pour faciliter l'accès à ce qui se trouve à l'arrière du siège. Ce type de mécanisme est, le plus souvent, constitué d'un flasque qui est articulé sur l'armature d'assise et d'un crochet articulé qui est associé à la partie arrière du flasque et qui coopère avec un pêne fixé à l'arrière de l'armature d'assise. Un tel mécanisme est affecté par des jeux inhérents, d'une part, au couple crochet-pêne arrière et, d'autre part, à l'axe de basculement vers l'avant. En effet, pour qu'un tel siège puisse se reverrouiller automatiquement comme cela est habituellement le cas lorsqu'on le replace de sa position basculée vers l'avant à sa position érigée où il est en situation pour être occupé, d'une part, et pour que le crochet soit bien engagé à fond sur le pêne dans une position de verrouillage irréversible, d'autre part, il est nécessaire de disposer d'un jeu fonctionnel. Un tel jeu est source de bruit parasite que l'on tente d'annihiler en équipant parfois l'une de ces pièces du mécanisme de butées souples, en caoutchouc ou en élastomère, qui se compriment lors du reverrouillage et absorbent élastiquement les jeux existants. Toutefois, la présence de telles butées élastiques est à l'origine de mauvais reverrouillages et, dans tous les cas, ces butées finissent par se tasser et donc à perdre leur aptitude à la résorption des jeux de fonctionnement. De plus, le prix de ces butées et le coût de leur pose grèvent les prix de revient.

En outre, tous les jeux présents des différents mécanismes ont tendance à s'ajouter et donnent une sensation désagréable de qualité défectueuse. De tels jeux existent ou prennent naissance notamment dans les glissières de réglage longitudinal, dans les systèmes de réglage en hauteur, dans les articulations de basculement ainsi que dans les dispositifs de réglage de l'inclinaison, etc. L'existence de ces jeux peut se traduire par un déplacement parasite de plusieurs centimètres, mesurés au point le plus haut du dossier, du fait du bras de levier.

US-A-5 156 439 décrit un siège pour véhicule automobile muni de mécanismes de basculement et de réglage d'inclinaison du dossier.

DE-A-4 012 860 décrit une articulation sans jeu pour siège avec une assise et avec un dossier basculable mobile entre une position érigée et une position rabattue relativement à l'assise, articulation du type comprenant une monture faite d'un flasque fixe solidaire de l'assise et d'un flasque mobile associé au dossier, un palier fait d'une partie mâle et d'une partie femelle coopérant librement ensemble avec jeu et dont l'une est portée par l'un des flasques et dont l'autre est portée par l'autre des flasques, un verrou fait d'un arrêtoir fixe et d'un loquet mobile coopérant ensemble et dont l'un est porté par l'un des flasques et dont l'autre est porté par l'autre des flasques ainsi que d'une sollicitation élastique agissant sur le loquet et tendant à appliquer ce dernier contre l'arrêtoir afin d'immobiliser le dossier en position érigée et une commande agissant sur le loquet à l'encontre de la sollicitation élastique pour séparer le loquet de l'arrêtoir afin de pouvoir basculer le dossier de sa position érigée à sa position rabattue.

Le but de l'invention est de créer une articulation sans jeu pour un siège à dossier basculable mobile entre une position érigée d'utilisation et une position rabattue de dégagement, notamment pour un siège de véhicules automobiles par exemple terrestres.

A cet effet, l'invention a pour objet une articulation sans jeu pour siège avec une assise et avec un dossier basculable mobile entre une position érigée et une position rabattue relativement à l'assise, du type décrit dans DE-A-4 012 860, caractérisée en ce que l'une au moins de ces parties mâle et partie femelle du palier a une configuration non-circulaire de manière à délimiter deux zones de contact en V des parties mâle et femelle, en ce que l'arrêtoir du verrou a un profil en came et le loquet du verrou a un profil en contre-came destiné à coopérer avec celui de la came de l'arrêtoir et en ce que le palier et le verrou sont placés relativement l'un par rapport à l'autre de manière que lorsque les came et contre-came de l'arrêtoir et du loquet du verrou sont appliquées l'une contre l'autre par la sollicitation élastique la partie mâle et la partie femelle du palier ont tendance à se déplacer relativement l'une à l'autre dans le sens qui résorbe le jeu entre ces parties mâle et femelle, le palier reposant en équilibre par les deux zones de contact en V des parties mâle et femelle.

L'invention a aussi pour objet l'application d'une telle articulation à un siège équipé d'un dispositif de réglage de l'inclinaison du dossier relativement à l'assise.

D'autres caractéristiques de l'invention ressortiront de la lecture de la description et des revendications qui suivent ainsi que de l'examen du dessin annexé, donné seulement à titre d'exemple, où :
- la Figure 1 est une vue de côté schématique d'un mode de réalisation d'une articulation selon l'invention en position érigée du dossier du siège;
- la Figure 2 est une vue analogue à celle de la Figure 1 où le dossier est en début de rabattement vers la position de dégagement; et
- la Figure 3 est une vue analogue à celle de la Figure 1 d'un autre mode de réalisation d'une articulation suivant l'invention appliquée au cas où le siège est en outre équipé d'un dispositif de réglage de l'inclinaison du dossier relativement à l'assise.

Les sièges à dossier basculable relativement à l'assise et, en particulier, ceux utilisés à bord des véhicules automobiles par exemple terrestres étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté. En particulier il pourra se reporter utilement au document EP-A-0 121 452 par exemple.

Pour la commodité de l'exposé, on décrira successivement chacun des constituants d'une articulation perfectionnée selon l'invention avant d'en exposer la fabrication au besoin, le montage et le fonctionnement.

Dans ce qui suit, on utilise toujours un même numéro de référence pour identifier un élément homologue quel que soit le mode de réalisation ou sa variante d'exécution.

Une articulation sans jeu selon l'invention est destinée à équiper un siège 10 qui comprend une assise 11 et un dossier 12 basculable par rapport à l'assise, comme il est bien connu, du genre par exemple de ceux qui équipent des véhicules à deux portes latérales par exemple du type "coupé" ou "cabriolet" où il est d'usage que le dossier qui est normalement en position érigée en vue de son occupation par un passager ou un conducteur, peut prendre une position rabattue de dégagement pour faciliter l'accès à ce qui est à l'arrière du siège. Comme il est connu, l'assise et le dossier comprennent, chacun, une armature, le plus souvent mécano-soudée, à laquelle est associé un coussin ou similaire fait de tout matériau approprié.

L'articulation sans jeu selon l'invention comprend, essentiellement, une monture 20, un palier 30, un verrou 40 et une commande 50.

La monture 20 comprend un flasque 21 fixe solidaire de l'assise 11 et un flasque 22 mobile associé au dossier 12. Un butoir 220 solidaire du flasque fixe en coopérant avec le flasque mobile, détermine la position érigée du dossier.

Le palier 30 comprend une partie mâle 31 et une partie femelle 32 coopérant librement ensemble et dont l'une est portée par l'un des flasques 21, 22 et dont l'autre est portée par l'autre des flasques 21, 22. De préférence, la partie mâle 31 du palier 30 est portée par le flasque fixe 21 et la partie femelle 32 du palier 30 est portée par le flasque mobile 32. Comme on peut l'observer, l'une au moins des parties du palier a une configuration non-circulaire, notamment cunéiforme par exemple trapézoïdale à bases courbes et à côtés rectilignes en méplats, et l'autre de ces parties s'il y a lieu a aussi une configuration non-circulaire, notamment avec deux flancs non parallèles. La partie mâle est engagée dans la partie femelle de manière à pouvoir s'y déplacer librement de préférence avec jeu et à pouvoir venir au contact des côtés obliques de la configuration cunéiforme et à avoir tendance à s'y "coincer" sans jeu lorsque le dossier est en position érigée, comme on le comprendra par la suite. Comme on peut l'observer, de préférence, c'est la partie femelle qui constitue une portée alors que la partie mâle constitue un axe.

Le verrou 40 comprend un arrêtoir 41 fixe et un loquet 42 mobile coopérant ensemble, et dont l'un est porté par l'un des flasques 21, 22 et dont l'autre est porté par l'autre des flasques 21, 22, ainsi qu'une sollicitation élastique 43 agissant sur le loquet 42 et tendant à appliquer ce loquet contre l'arrêtoir. Une butée 420 telle une cheville ou un plot, limite l'amplitude du déplacement du loquet 42 sous l'action de la sollicitation élastique. Pour le mode de réalisation particulier illustré, on voit que l'arrêtoir 41 du verrou 40 est porté par le flasque fixe 21 et que le loquet 42 du verrou 40 est monté basculant par exemple à l'aide d'un trou et d'une tige ou similaires sur le flasque mobile 22 qui porte la butée 220. Comme on peut l'observer, l'arrêtoir a un profil en came et le loquet un profil en contre-came destiné à coopérer avec celui de la came. S'il y a lieu le loquet est aussi muni d'une branche 421 pour les raisons qui apparaîtront par la suite.

La commande 50 comprend notamment un levier 51 pivotant au moins dans un sens, par exemple porté de préférence par le flasque 22 sur lequel il est monté de toute manière appropriée et permettant d'agir à l'aide d'une poignée de manoeuvre ou similaire sur le loquet 42 à l'encontre de la sollicitation élastique 43 pour séparer le loquet 42 de l'arrêtoir 41 afin de pouvoir basculer le dossier de sa position érigée à sa position rabattue. De préférence ce levier comprend un bras 511 destiné à coopérer avec la branche 421 du loquet 42 du verrou 40.

Pour ce mode de réalisation, on observera que le butoir et l'arrêtoir sont constitués par une pièce unique ou d'un seul tenant dont on utilise des zones différentes, mais il est clair que butoir et arrêtoir peuvent être physiquement distincts. De même la position érigée du dossier peut être définie par un arrêtoir placé ailleurs, par exemple sur l'armature de dossier, et coopérant avec le plancher du véhicule.

Quel que soit le mode de réalisation, il est clair que les flasques peuvent être rapportés ou d'un seul tenant avec les armatures de l'assise et du dossier.

Les positions respectives du palier 30 et du verrou 40 sont choisies de manière à ce que ce palier et ce verrou soient placés, relativement l'un par rapport à l'autre, dans des situations qui lorsque les came et contre-came de l'arrêtoir 41 et du loquet 42 du verrou 40 sont appliquées l'une contre l'autre, font que la partie mâle 31 et la partie femelle 32 du palier 30 ont tendance à se déplacer relativement l'une à l'autre dans le sens qui résorbe le jeu existant, quelle qu'en soit la nature, entre les parties mâle 31 et femelle 32. Pour le mode de réalisation illustré, on observera que les côtés obliques de la configuration cunéiforme sont convergents en direction du verrou de manière que le contact du loquet et de l'arrêtoir, sous l'action de la sollicitation élastique, crée une réaction qui a tendance à chasser l'une des parties du palier dans le sens qui assure un contact sans jeu par un phénomène de "coincement" entre les parties mâle et femelle, que ce jeu résulte des tolérances de fabrication ou de l'usure.

Tous les constituants d'une articulation selon l'invention sont faits dans des matériaux traditionnels, par exemple métallique, qui sont mis en forme et usinés selon des techniques classiques convenablement adaptées telles que l'emboutissage, l'estampage, la découpe, le tournage, le fraisage, la rectification, le soudage, le rivetage, le vissage, etc.

Tous les constituants d'une articulation perfectionnée selon l'invention sont réunis, assemblés et montés comme cela ressort clairement des figures du dessin.

On décrira maintenant le fonctionnement d'une articulation selon l'invention étant entendu que, de préférence, chaque côté d'un siège est équipé d'une articulation identique ou symétrique et qu'une seule commande sert à actionner conjointement les deux articulations, comme il est classique.

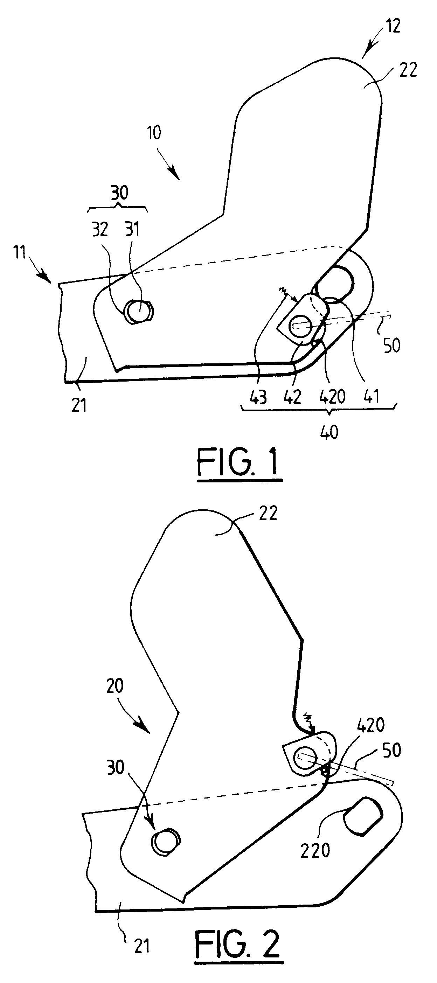

On supposera qu'initialement un siège est dans la position où il est illustré sur la Figure 1 avec son dossier en position érigée et verrouillée sans jeu dans cette situation.

On observera que les profils choisis pour la came et la contre-came de même que les positions choisies pour les points de contact came-contre-came et axe de basculement du loquet sont tels que sous l'action de sa sollicitation élastique le verrou est condamné d'une manière irréversible. Ce contact came- contre-came crée une composante de réaction dans le sens qui résorbe automatiquement tout jeu existant entre les parties mâle et femelle du palier.

Si l'on veut faire basculer et rabattre le dossier par exemple vers l'avant afin d'accéder à ce qui se trouve à l'arrière du siège, on agit sur la commande dans le sens approprié pour faire tourner le loquet dans le sens anti-horaire sur la Figure 1, à l'encontre de la sollicitation élastique. La contre-came du loquet se sépare de la came de l'arrêtoir et l'on peut alors faire basculer le dossier grâce au palier, pour le rapprocher de l'assise du siège. Les dimensions des parties mâle et femelle du palier sont telles que la rotation relative n'est pas perturbée par la présence des parties non circulaires.

Pour faire repasser le dossier de sa position rabattue de dégagement à sa position érigée d'utilisation, on le bascule dans le sens horaire sur la Figure 2. Le loquet qui a pris sa position au contact de sa butée sous l'action de la sollicitation élastique qui tend à le faire tourner dans le sens horaire, rencontre la came et s'éclipse en basculant dans le sens anti-horaire à l'encontre de sa sollicitation, à la manière d'un mécanisme à échappement, et permet de la sorte au dossier de reprendre sa position érigée où le flasque mobile est appliqué contre le butoir. Le loquet, rappelé ensuite spontanément par sa sollicitation élastique après avoir échappé à l'arrêtoir, reprend contact contre la came et assure un verrouillage irréversible.

En même temps, la sollicitation élastique qui applique et maintient en contact les came et contre-came crée une composante de réaction qui tend à placer et maintenir au contact l'une de l'autre les parties mâle et femelle du palier du fait de la configuration non circulaire de l'une ou l'autre au moins de ces deux parties.

On voit donc que grâce à l'articulation selon l'invention, on obtient un verrouillage sans jeu du fait que le palier repose en équilibre par deux zones de contact en V des pièces mâle et femelle car le verrou, grâce à la présence de ses came et contre-came, annule tout jeu qui existerait aussi au niveau du montage basculant du loquet.

On observera en outre que le verrou assure un verrouillage irréversible du fait du choix judicieux des profils adoptés pour les came et contre-came qui tiennent compte de la nature des matériaux dont elles sont faites, et de la disposition judicieuse du palier, des points de contact came-contre-came et de l'axe de basculement du loquet. Ainsi, si l'on cherche par exemple à faire basculer le dossier sans agir préalablement sur le loquet pour déverrouiller le verrou, on tend à renforcer le blocage de la contre-came sur la came. Grâce à ceci, l'articulation selon l'invention résiste particulièrement bien aux cas de composantes longitudinales importantes d'efforts résultant par exemple d'un choc frontal ou similaire.

De plus, comme exposé précédemment, on observera que le reverrouillage est automatique sans que l'on ait à agir sur le loquet par l'intermédiaire de la commande.

L'exposé qui précède montre que l'articulation selon l'invention est simple, n'exige que peu de constituants et supprime totalement les jeux de construction, de fonctionnement ou d'usure pour la position érigée et verrouillée, les positions relatives came-contre-came et organe mâle-organe femelle s'ajustant automatiquement.

Il est clair que l'on peut intervertir les rôles joués par les parties mâle et femelle du palier ainsi que ceux des came et contre-came du verrou.

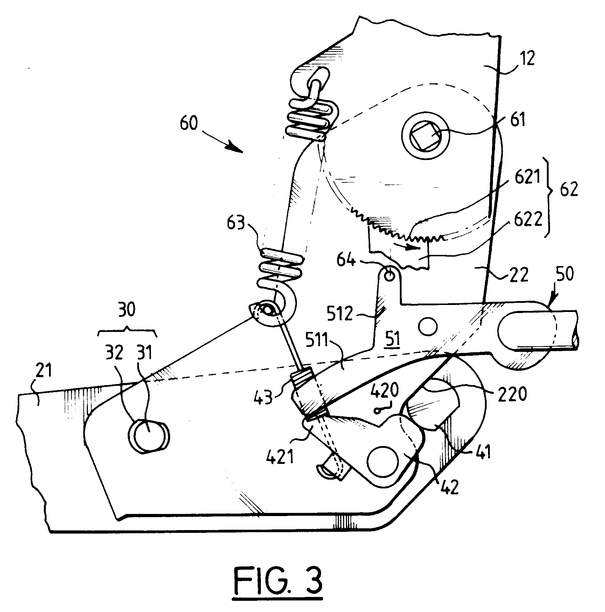

La Figure 3 illustre l'application d'une articulation selon l'invention à un siège dont le dossier est, en outre, équipé d'un dispositif de réglage de l'inclinaison du dossier par rapport à l'assise. Le dispositif de réglage de l'inclinaison est par exemple du type de celui décrit par le document indiqué précédemment auquel on se reportera utilement.

On rappelera seulement que ce dispositif de réglage de l'inclinaison 60 comprend un axe 61 selon lequel le dossier peut s'incliner de manière à modifier à volonté son orientation relative par rapport à l'assise.

L'inclinaison est définie par des organes de blocage 62 tels un secteur denté 621 et un "grain" denté 622 coopérant avec ce dernier. Le grain denté peut s'approcher du secteur denté et "engrener" avec lui pour l'immobiliser ou s'en écarter pour le libérer et permettre une modification de l'inclinaison du dossier. Dans ce cas particulier, la commande 50 de l'articulation permet aussi d'agir sur le dispositif de réglage de l'inclinaison en opérant sur le grain denté afin d'au moins l'écarter à volonté du secteur denté. A cet effet, la commande 50 comprend un levier 51 avec un deuxième bras 512 qui coopère de préférence indirectement avec le grain denté par exemple par l'intermédiaire d'une timonerie 64 du type de celle décrite dans le document précité et pour cela seulement schématisé par un trait discontinu. Dans ce cas, la commande 50 a deux sens opposés d'action. Dans un sens, elle agit sur le verrou 40 comme précédemment indiqué et n'opère pas sur le dispositif de réglage d'inclinaison qui reste immobilisé. Dans le sens opposé, elle n'opère pas sur le verrou, le loquet étant maintenu au contact de l'arrêtoir par sa sollicitation élastique, et elle agit seulement sur le grain pour le séparer du secteur denté et autoriser le déplacement du dossier dans la position recherchée, au besoin à l'encontre de l'action d'un moyen de rappel 63 tel un ressort à boudin tendant à placer normalement le dossier en position "droite". Ceci est clairement illustré sur la Figure 3 où l'on voit que la sollicitation élastique 43 est ancrée d'une part sur la branche 421 du loquet et, d'autre part sur le flasque 22 et aussi que le moyen de rappel 63 est ancré d'une part sur le dossier 12 et d'autre part sur le flasque 22.

De plus, pour parfaire le fonctionnement, au lieu d'agir seulement sur l'un ou l'autre des verrou et dispositif à la fois, la commande tout en agissant sur l'un de ceux-ci assure en outre la condamnation de l'autre sur lequel elle n'opère pas afin de le bloquer réellement dans la position qui conserve l'inclinaison du dossier ou maintient la siège en position érigée.

Ce qui précède met bien en lumière les particularités distinctives de l'invention, expose l'intérêt qu'elle offre et explicite les avantages qu'elle procure.

## Revendications

1. Articulation sans jeu pour siège (10) avec une assise (11) et avec un dossier (12) basculable mobile entre une position érigée et une position rabattue relativement à l'assise (11), articulation du type comprenant une monture (20) faite d'un flasque (21) fixe solidaire de l'assise (11) et d'un flasque (22) mobile associé au dossier (12), un palier (30) fait d'une partie mâle (31) et d'une partie femelle (32) coopérant librement ensemble avec jeu et dont l'une est portée par l'un des flasques (21, 22) et dont l'autre est portée par l'autre des flasques (21, 22), un verrou (40) fait d'un arrêtoir (41) fixe et d'un loquet (42) mobile coopérant ensemble et dont l'un est porté par l'un des flasques (21, 22) et dont l'autre est porté par l'autre des flasques (21, 22) ainsi que d'une sollicitation élastique (43) agissant sur le loquet (42) et tendant à appliquer ce dernier contre l'arrêtoir (41) afin d'immobiliser le dossier (12) en position érigée et une commande (50) agissant sur le loquet (42) à l'encontre de la sollicitation élastique (43) pour séparer le loquet (42) de l'arrêtoir (41) afin de pouvoir basculer le dossier (12) de sa position érigée à sa position rabattue, caractérisée en ce que l'une au moins de ces parties mâle (31) et partie femelle (32) du palier (30) a une configuration non-circulaire de manière à délimiter deux zones de contact en V des parties mâle (31) et femelle (32), en ce que l'arrêtoir (41) du verrou (40) a un profil en came et le loquet (42) du verrou (40) a un profil en contre-came destiné à coopérer avec celui de la came de l'arrêtoir (41) et en ce que le palier (30) et le verrou (40) sont placés relativement l'un par rapport à l'autre de manière que lorsque les came et contre-came de l'arrêtoir (41) et du loquet (42) du verrou (40) sont appliquées l'une contre l'autre par la sollicitation élastique (43) la partie mâle (31) et la partie femelle (32) du palier (30) ont tendance à se déplacer relativement l'une à l'autre dans le sens qui résorbe le jeu entre ces parties mâle (31) et femelle (32), le palier (30) reposant en équilibre par les deux zones de contact en V des parties mâle (31) et femelle (32).

2. Articulation selon la revendication 1, caractérisée en ce que la partie femelle (31) a une configuration cunéiforme avec deux côtés obliques.

3. Articulation selon la revendication 1 ou la revendication 2, caractérisée en ce que la partie mâle (31) a deux flancs non parallèles.

4. Articulation selon l'une quelconque des revendications précédentes, caractérisée en ce que la partie mâle (31) du palier (30) est portée par le flasque fixe (21) et la partie femelle (32) du palier (30) est portée par le flasque mobile (32).

5. Articulation selon l'une quelconque des revendications précédentes, caractérisée en ce que l'arrêtoir (41) du verrou (40) est porté par le flasque fixe (21) et le loquet (42) du verrou (40) est monté basculant sur le flasque mobile (22).

6. Articulation selon l'une quelconque des revendications précédentes, caractérisée en ce que la commande (50) comprend un levier (51) pivotant avec un bras (511), en ce que le loquet (42) du verrou (40) comprend une branche (421) qui coopère avec ce bras (511) et qui est soumise à la sollicitation élastique (43).

7. Application d'une articulation conforme à l'une quelconque des revendications précédentes à un siège (10) équipé en outre d'un dispositif de réglage (60) de l'inclinaison du dossier (12) relativement à l'assise (11) où cette commande (50) à deux sens opposés d'action, un sens où elle agit seulement sur le verrou (40) pour permettre le basculement du dossier (12) de sa position érigée à sa position rabattue et un autre sens où elle agit seulement sur le dispositif de réglage (60) pour permettre un changement de l'inclinaison du dossier (12) par rapport à l'assise (11) du siège (10).

8. Application d'une articulation conforme à l'une quelconque des revendications précédentes à un siège de véhicule, notamment à un siège de véhicule automobile terrestre.

## Claims

1. Articulation without play for a seat (10) with a seat surface (11) and with a tilting seat back (12), which may be moved between an erect position and a folded down position in relation to the seat surface (11), said articulation being of the type comprising a mounting (20) formed by a fixed plate (21) integral to the seat surface (11) and a moveable plate (22) connected to the seat back (12), a bearing (30) formed by a male part (31) and a female part (32) freely cooperating with one another with play, one of which being supported by one of the plates (21, 22) and the other supported by the other plate (21, 22), a locking means (40) formed by a fixed arresting element (41) and a moveable drop latch (42) cooperating with one another, one of which being supported by one of the plates (21, 22) and the other supported by the other plate (21, 22), and also formed by an elastic stressing means (43) acting on the drop latch (42) and tending to press the latter against the arresting element (41) in order to immobilise the seat back (12) in the erect position, and a control means (50) acting on the drop latch (42) against the elastic stressing means (43) to separate the drop latch (42) from the arresting element (41) so as to be able to tilt the seat back (12) from its erect position into its folded down position, characterised in that at least one of these male(31) and female parts (32) of the bearing (30) has a non-circular configuration so as to define two V-shaped contact zones of the male parts (31) and female parts (32), that the arresting element (41) of the locking means (40) has a cam profile and the drop latch (42) of the locking means (40) has a cam follower profile designed to cooperate with that of the cam of the arresting element (41), and that the bearing (30) and the locking means (40) are positioned relative to one another so that when the cam and cam follower of the arresting element (41) and the drop latch (42) of the locking means (40) are pressed one against the other by the elastic stressing means (43), the male part (31) and female part (32) of the bearing (30) tend to be displaced relative to one another in the direction absorbing the play between these male (31) and female (32) parts, the bearing (30) resting balanced by the V-shaped contact zones of the male (31) and female (32) parts.

2. Articulation according to Claim 1, characterised in that the female part (31) has a wedge-shaped configuration with two oblique sides.

3. Articulation according to Claim 1 or Claim 2, characterised in that the male part (31) has two non-parallel flanks.

4. Articulation according to any one of the preceding claims, characterised in that the male part (31) of the bearing (30) is supported by the fixed plate (21) and the female part (32) of the bearing (30) is supported by the moveable plate (32).

5. Articulation according to any one of the preceding claims, characterised in that the arresting element (41) of the locking means (40) is supported by the fixed plate (21) and the drop latch (42) of the locking means (40) is mounted so as to tilt on the moveable plate (22).

6. Articulation according to any one of the preceding claims, characterised in that the control means (50) comprises a pivoting lever (51) with an arm (511), that the drop latch (42) of the locking means (40) comprises a branch (421) which cooperates with this arm (511) and which is subjected to the action of the elastic stressing means (43).

7. Application of an articulation in accordance with any one of the preceding claims to a seat (10) additionally equipped with an adjusting device (60) for inclination of the seat back (12) relative to the seat surface (11), wherein said control means (50) has two opposing directions of action, one direction in which it acts solely on the locking means (40) to enable the seat back (12) to tilt from its erect position into its folded down position, and another direction in which it acts solely on the adjusting device (60) to allow a change in the inclination of the seat back (12) in relation to the seat surface (11) of the seat (10).

8. Application of an articulation in accordance with any one of the preceding claims to a vehicle seat, in particular a seat of a land motor vehicle.

## Patentansprüche

1. Gelenk mit Spielausgleich für einen Sitz (10) mit einer Sitzfläche (11) und einer schwenkbaren Rückenlehne (12), die zwischen einer gegenüber der Sitzfläche (11) aufgerichteten Position und einer dazu heruntergeklappten Position beweglich ist, wobei dieses Gelenk von der Art ist, welche eine Vorrichtung (20) enthält, die aus einem fest mit der Sitzfläche (11) verbundenen Flansch (21) und einem beweglichen mit der Rückenlehne (12) verbundenen Flansch (22) besteht, mit einem Lager (30) aus einem Einsteckteil (31) und einem Aufnahmeteil (32), die frei mit Spielausgleich zusammenwirken, und von denen der eine Teil von einem der Flansche (21, 22) getragen wird, während der andere Teil von dem anderen der Flansche (21, 22) getragen wird, und mit einem Riegel (40), der aus einer festen Arretierung (41) und einer beweglichen Fallklinke (42) besteht, die zusammenwirken und von denen das eine Teil von einem der Flansche (21, 22) getragen wird, während das andere Teil von dem anderen der Flansche (21, 22) getragen wird, und weiterhin mit einer elastischen Spannvorrichtung (43), die auf die Fallklinke (42) einwirkt und diese gegen die Arretierung (41) drückt, um die Rückenlehne (12) in der aufgerichteten Position zu blockieren, und mit einer Betätigung (50), welche auf die Fallklinke (42) gegen die elastische Spannvorrichtung (43) einwirkt, um die Fallklinke (42) von der Arretierung (41) zu lösen, damit die Rückenlehne (12) aus ihrer aufgerichteten Position in ihre heruntergeklappte Position geschwenkt werden kann,
**dadurch gekennzeichnet**, **daß**
mindestens eines der Einsteckteile (31) und Aufnahmeteile (32) des Lagers (30) eine Konfiguration hat, die nicht kreisförmig ist, so daß zwei V-förmige Kontaktflächen zwischen dem Einsteckteil (31) und dem Aufnahmeteil (32) ausgebildet werden, und dadurch, daß die Arretierung (41) des Riegels (40) ein Profil in Form einer Führungsnocke hat, welche mit dem Profil der Nocke der Arretierung (41) zusammenwirkt, und dadurch, daß das Lager (30) und der Riegel (40) relativ zueinander angeordnet sind, so daß sich, wenn die Nocke und die Führungsnocke der Arretierung (41) und der Fallklinke (42) des Riegels (40) mittels der Spannvorrichtung (43) miteinander in Kontakt gebracht werden, der Einsteckteil (31) und der Aufnahmeteil (32) des Lagers (30) relativ zueinander in die Richtung bewegen, welche das Spiel zwischen dem Einsteckteil (31) und dem Aufnahmeteil (32) resorbiert, während das Lager (30) mittels der beiden V-förmigen Kontaktbereiche zwischen dem Einsteckteil (31) und dem Aufnahmeteil (32) im Gleichgewicht gehalten wird.

2. Gelenk mit Spielausgleich nach Anspruch 1,
**dadurch gekennzeichnet**, **daß**
der Einsteckteil (31) eine keilförmige Konfiguration mit zwei schrägen Seiten hat.

3. Gelenk mit Spielausgleich nach Anspruch 2,
**dadurch gekennzeichnet**, **daß**
der Einsteckteil (31) zwei nicht parallele Flanken aufweist.

4. Gelenk mit Spielausgleich nach einem der vorausgegangenen Ansprüche,
**dadurch gekennzeichnet**, **daß**
der Einsteckteil (31) des Lagers (30) von dem festen Flansch (21) getragen wird, während der Aufnahmeteil (32) des Lagers (30) von dem beweglichen Flansch (22) getragen wird.

5. Gelenk mit Spielausgleich nach einem der vorausgegangenen Ansprüche,
**dadurch gekennzeichnet**, **daß**
die Arretierung (41) des Riegels (40) von dem festen Flansch (21) getragen wird, und daß die Fallklinke (42) des Riegels (40) schwenkbar auf dem beweglichen Flansch (22) montiert ist.

6. Gelenk mit Spielausgleich nach einem der vorausgegangen Ansprüche,
**dadurch gekennzeichnet**, **daß**
die Betätigung (50) einen kippbaren Hebel (51) mit einem Arm (511) aufweist, und dadurch, daß die Fallklinke (42) des Riegels (40) einen Schenke (421) aufweist, der mit diesem Arm (511) zusammenwirkt und durch die elastische Spannvorrichtung (43) beaufschlagt wird.

7. Einsatz eines Gelenkes mit Spielausgleich nach einem der vorausgegangenen Ansprüche in einem Sitz (10), der außerdem mit einer Vorrichtung (60) für die Regulierung der Neigung der Rückenlehne (12) gegenüber der Sitzfläche (11) ausgerüstet ist und bei dem die Betätigung (50) in zwei entgegengesetzten Richtungen aktiviert werden kann, und zwar in einer Richtung, in der sie nur auf den Riegel (40) einwirkt, um die Schwenkung der Rückenlehne (12) aus ihrer aufgerichteten Position in ihre heruntergeklappte Position zu ermöglichen, sowie in einer anderen Richtung, in der sie nur auf die Reguliervorrichtung (60) einwirkt, um eine Veränderung der Neigung der Rückenlehne (12) gegenüber der Sitzfläche (11) des Sitzes (10) zu ermöglichen.

8. Verwendung eines Gelenkes mit Spielausgleich nach einem der vorausgegangenen Ansprüche in einem Fahrzeugsitz, und insbesondere in einem Sitz eines Kraftfahrzeugs.
